# EUROPEAN PATENT SPECIFICATION

(11) **EP 4 229 566 B1**
(45) Date of publication and mention of the grant of the patent: **29.07.2026**
(21) Application number: 21783622.0
(22) Date of filing: 25.08.2021
(51) Int. Cl.: G06Q 10/00, G06Q 10/06, G06Q 10/10

(54) **SMART SYSTEM FOR ADAPTING AND ENFORCING PROCESSES**
INTELLIGENTES SYSTEM ZUR ANPASSUNG UND DURCHSETZUNG VON PROZESSEN
SYSTÈME INTELLIGENT POUR ADAPTER ET APPLIQUER DES PROCÉDÉS

(30) Priority: 19.10.2020 US 202063093628 P
(43) Date of publication of application: 23.08.2023
(73) Proprietor: K2AI, LLC, Oak Park, MI 48009 (US)
(72) Inventor: KERWIN, Kevin Richard, Birmingham, MI 48009 (US)
(74) Representative: Marks & Clerk LLP
(86) International application number: PCT/US2021/047513
(87) International publication number: WO 2022/086627

(56) References cited:
- WO-A1-2020/176908
- US-A1- 2020 013 156
- US-A1- 2020 314 490

## Description

### CROSS-REFERENCE TO RELATED APPLICATION

This application claims priority to United States Provisional Application No. 63/093628, filed on October 19, 2020.

### TECHNICAL FIELD

The present disclosure relates generally to industrial processes and more specifically to a method and system for adapting and enforcing a process based on neural network image analysis of video feeds.

### BACKGROUND

Processes such as assembly of components in a manufacturing process, deconstruction and repair of components in a maintenance process, and installation of components in an installation process can include multiple steps that should be performed in a particular sequence or can require altering steps when a preceding step is performed out of order or performed incorrectly. For the purposes of this disclosure, these processes are referred to, along with any similar processes, using the umbrella term industrial processes. WO 2020/176908A1 discloses optimizing assembly workflow by sequencing steps and adjusting instructions. US 2020/314490A1 discloses media manipulation using user cognitive metrics, including facial data. US 2020/013156A1 discloses monitoring assembly manufacturing with projected targets and inspection prompts.

By way of example, when assembling certain electrical systems, a set of wires for a given connection should be connected completely before connecting another sets of wires. In some cases incorrect performance of a step (e.g. connecting the wrong wire to a given terminal) or performing steps out of sequence (e.g. tightening a first bolt before inserting a second bolt) can result in damage to the item being worked on when the item is activated or inoperability of the finished installation. Similar problems can arise when mechanically connecting fasteners or components in the wrong order or the wrong position or using an incorrect amount force to install a component. Current systems provide a static set of instructions to an operator performing the industrial process and cannot correct for errors or mistakes made earlier in the process.

Some example systems attempt to enforce the order of operations by requiring the operator to expressly confirm that a step has been taken, providing tools to the operator in a specific order, organizing fasteners in specific designated bins and the like. Each of the current processes for preventing errors during the industrial process is susceptible to human error. By way of example, when tools are presented in a specific order, one of the tools may be misplaced or in the wrong order by the person preparing the process. Similarly, when components are sorted by bins, one or more components can be inadvertently included in a bin for a different component type.

Exacerbating the difficulties associated with maintaining the correct steps and procedures for an industrial process is the fact that errors can, in some cases, go unnoticed for multiple steps and the order of the steps for the process is fixed. When an error goes unnoticed, the operator is required to reverse multiple steps and return to the incorrectly performed step(s) in order to correct the issue.

What is needed is a system for monitoring and enforcing an industrial process where the system is able to actively inform the operator of the current step and adapt the process to conform to the steps that have already been performed.

### SUMMARY OF THE INVENTION

A method performed by a smart system for optimizing a process is defined by appended claim 1. Further embodiments of the method are defined by appended claims 2 to 12. An exemplary method for optimizing a process includes selecting a nominal process and providing instructions for a step of the nominal process to a user, analyzing at least one camera feed using a neural network and determining at least one of an action performed by the user and an action expected to be performed by the user, adapting the nominal process in response to the action performed by the user varying from the provided instructions, providing instructions for a next step of the adapted nominal process, wherein the instructions for a next step deviate from the nominal process based on the determined action performed by the user, and reiterating the steps of analyzing the at least one camera feed, adapting the nominal process, and providing instructions for a next step of the adapted process until the process is completed.

In another example of the above described method for optimizing a process analyzing at least one camera feed includes monitoring a stationary camera feed and determining the action performed by the user includes identifying an interaction between the user and an assembly within a field of view of the stationary camera feed.

In another example of any of the above described methods for optimizing a process adapting the nominal process includes comparing the determined action performed by the user with a plurality of actions defined by the nominal process and removing a subsequent step from the adapted nominal process in response to the determined action matching the subsequent step.

In another example of any of the above described methods for optimizing a process, adapting the nominal process includes generating the next step and wherein the next step includes reverting at least part of the action performed by the user.

Another example of any of the above described methods for optimizing a process further includes enforcing at least a portion of the nominal process by disabling at least one of a tool and an operation in response to the determined action expected to be performed by the user varying from the nominal process.

In another example of any of the above described methods for optimizing a process, disabling the at least one of the tool and the operation comprises preventing a user from performing the expected determined action.

Another example of any of the above described methods for optimizing a process further includes enforcing at least a portion of the nominal process by displaying a correct procedure of the step to a user.

In another example of any of the above described methods for optimizing a process the at least one camera feed includes a stationary camera feed and wherein displaying a correct procedure of the step includes displaying the stationary camera feed and displaying an overlay superimposed on the camera feed.

Another example of any of the above described methods for optimizing a process further includes projecting the overlay directly onto at least a portion of a work area.

In another example of any of the above described methods for optimizing a process the overlay includes a computer generated animation demonstrating the nominal process.

In another example of any of the above described methods for optimizing a process the nominal process includes a plurality of ordered steps and the plurality of ordered steps includes a subset of sequence dependent steps, and wherein adapting the nominal process includes displaying a next sequence dependent step in response to the determined action being an initial step of the subset of sequence dependent steps.

Another example of any of the above described methods for optimizing a process further includes preventing actions and operations unnecessary to perform the sequence dependent steps until the subset of sequence dependent steps is performed in response to determining that the initial step of the subset of sequence dependent steps is the at least one of the action performed by the user and the action expected to be performed by the user.

In another example of any of the above described methods for optimizing a process preventing actions and operations unnecessary to perform the sequence dependent steps until the subset of sequence dependent steps is performed includes one of disabling at least one tool unnecessary to perform the sequence dependent steps and limiting operations of at least one tool to a mode of operations required for performance of a current step of the sequence dependent steps.

In another example of any of the above described methods for optimizing a process analyzing the at least one camera feed using the neural network includes identifying a plurality of objects within the at least one camera feed using a neural network, monitoring a relative position of the plurality of objects using the neural network over a time period, comparing a change in the relative position over the time period against a plurality of predefined movements, each of the movements being correlated with at least one user action, and determining that at least one specific action has occurred in response to the change in relative positions matching at least one correlated user action to a confidence level above a determined confidence.

In another example of any of the above described methods for optimizing a process the determined confidence is iteratively refined over time via a neural network

A smart system for a manual process is defined by appended claim 13. Further embodiments of the smart system are defined by dependent claims 14 and 15. In one exemplary embodiment a smart system for a manual process includes a workstation including at least one smart tool and a workspace, the smart tool being connected to a processing system, at least a first camera having a first field of view including the workspace, the first camera being connected to the processing system, a dynamic display connected to the processing system and configured to receive instructions corresponding to at least a current step of an operation and display the instructions, the processing system including a memory and a processor, the memory storing instructions for causing the processor to selecting a nominal process and providing instructions for a step of the nominal process to a user, analyzing at least one camera feed using a neural network and determining at least one of an action performed by the user and an action expected to be performed by the user, adapting the nominal process in response to the action performed by the user varying from the provided instructions, providing instructions for a next step of the adapted nominal process, wherein the instructions for a next step deviate from the nominal process based on the determined action performed by the user, and reiterating the steps of analyzing the at least one camera feed, adapting the nominal process, and providing instructions for a next step of the adapted process until the process is completed.

In another example of the above described smart system for a manual process the at least one camera includes a first static camera providing a static view of the workspace and a second dynamic camera configured to provide a dynamic view of the workspace.

In another example of any of the above described smart systems for a manual process the dynamic camera is one of a wearable camera defining a field of view including at least a portion of an operator, a camera fixed to a smart tool connected to the processing system, and a moveable camera defining a field of view including at least one worked object.

In another example of any of the above described smart systems for a manual process the at least a portion of the operator includes the operator's hand.

### BRIEF DESCRIPTION OF THE DRAWINGS

Figure 1 illustrates a high level schematic of a smart workstation for an industrial process.
Figure 2 illustrates an exemplary method by which a processing system can determine an action being performed or about to be performed by a user.
Figure 3 illustrates a method for adapting an industrial process using the smart workstation of Figure 1.

### DETAILED DESCRIPTION

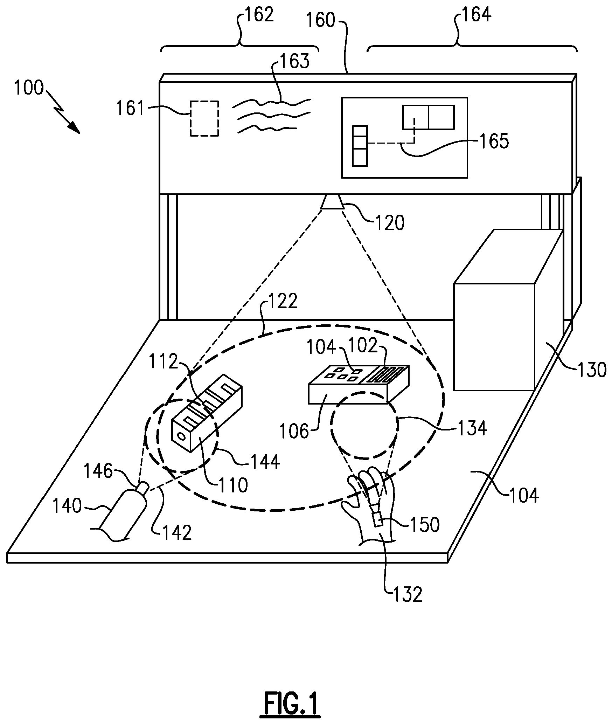

Figure 1 schematically illustrates a smart workstation 100 for performing industrial processes. In the illustrated example, the workstation 100 is configured to facilitate the mechanical connections of wires 102 to specific terminals 112 of a component 106 using fasteners 104. The particulars of the illustrated industrial process are exemplary in nature and practical implementations of the system are not limited to the illustrated industrial process. The workstation 100 includes a workspace 104 on which the operator performs the industrial process. In alternative examples, the workspace 104 can be larger or have an alternative form and operate in the same capacity within the workstation 100.

A processing system 130 including a processor and a memory is positioned on the workstation 100. In alternate examples, the processing system 130 can be positioned anywhere near the workstation 100 and be in communication with the multiple elements of the workstation 100. The processing system 130 can be a PC, a thin client server configuration, a dedicated controller, or any similar electrical system including a processor and a memory. A fixed camera 120 is connected to the processing system 130 and defines a field of view 122 including a portion of the workspace 104. In alternative examples, the field of view 122 of the fixed camera 120 can include the entirety of the workspace 104. The fixed camera 120 is maintained in a static position, relative to the workspace 104 throughout the entirety of the industrial process. In one example the fixed camera 120 can be permanently fixed to the workspace 104 via fasteners or any other permanent fixture. In alternative examples the fixed camera 120 is maintained in a fixed position relative to the workspace 104 during the industrial process by a moveable structure such as a tripod or other temporary camera mount.

In addition to the fixed camera 120, a smart tool 140 including a camera 142 is connected to the processing system 130. The camera 142 on the smart tool 140 defines a second field of view 144, with the second field of view 144 being distinct from the field of view 122 defined by the first camera 120. The second field of view 144 includes a working output 146 of the smart tool 140, and provides a view of the portions of the component 112 that are being worked on while the operator is using the smart tool 140 to work on the component 112. As with the fixed camera 120, the video feed from the smart tool 140 is provided to the processing system 130 and analyzed by neural network derived algorithms contained in the memory of the processing system.

In some examples, a third wearable camera 150 is included within the workstation 100 and provides another video feed to the processing system 130. In the illustrated example, the wearable camera 130 is included in a glove 132 worn by an operator and provides a field of view 134 including the operator's hand, as well as at least part of any elements that are being manipulated by the operator using that hand. In alternative examples, alternative worn positions such as a forehead mounted camera, chest mounted camera, or any other similar worn position can be utilized. In further alternative examples, the field of view 134 can include only the working area and the operator's hand is not included.

In addition to the illustrated cameras 120, 142, 150 alternative embodiments can include additional fixed and/or dynamic cameras to assist in providing a more robust enforcement and adaption of the industrial process.

Connected to the processing system 130, and visible to the operator, is at least one screen 160. In examples including one screen 160, the screen 160 can be partitioned into multiple zones 162, 164. In alternative examples utilizing multiple screens, each screen corresponds to one of the zones 162, 164. The first zone 162 includes at least one of a graphical illustration 161 of the current step in the industrial process to be performed and a textual description 163 of the step in the process to be performed. In some examples, the textual description 163 can include a listing of multiple sequential steps with an indicator identifying which step is the step currently being performed.

The second zone 164 includes a display of at least one of the video feeds from the cameras 120, 142, 150. In the illustrated example, the field of view shown in the second zone 164 is a field of view 122 of the fixed camera 120. In addition to the instructions and graphical display shown in the first zone 162, the field(s) of view 122 shown in the second zone 164 can include one or more objects 165 overlaid on top of the displayed field of view. In the illustrated example, the overlaid object 165 is a dashed line indicated that a fastener 104 from a fixed bin 106 should be connected to the center slot 112 of the component 110 being worked on. In alternative embodiments, the overlay can be individual static images, boxes highlighting one or more portions of the component, animations demonstrating a current step, or any other graphical overlay configured to convey instructions to the operator. In yet further alternatives, the overlay can take the form of an image that is projected onto the work area 122. In such an example, the overlaid projection provides the same indicators and instructions as the examples where an overlay is included in the displayed image.

The video feed from the fixed camera 120 is provided to the processing system 130, which analyzes the video feed using one or more neural network derived algorithms. In one example the neural network derived algorithms detect the presence of distinct objects in each of the video feeds 122, 134, 144 and categorize each of the detected objects by type. Using multiple training data sets, the neural network associates relative motions or manipulations of the objects with actions taken by the user and actions expected to be taken. The actions taken by the user and expected to be taken by the user are correlated with steps of an assembly process.

Once trained, the neural network is configured to compare the relative motions of the identified objects to determine the currently performed step and compare currently performed step take with the list of steps in the industrial process. The original list of steps is referred to as the nominal process and reflects the ideal implementation of the industrial process. When the step matches the current step, the processing system 130 allows the step to proceed. Alternatively, when the determined step does not match the step being performed by the user but does match a different step, the processor 130 compares that step to the stored process and determines if the step is sequence dependent or is not sequence dependent. When the step is not sequence dependent, the processor 130 re-orders the steps and updates any necessary displays 163, 164 to reflect the re-ordering of the steps.

In yet another alternative, when the processor 130 determines that the step being performed is part of a sequence dependent step, the processing system 130 can respond by either displaying warnings on the screen 160 that the current step should be halted or by outputting a signal to the smart tool 140, or any other connected element, and prevent operation of the smart tool 140 or other connected element, thereby preventing completion of the step and enforcing the defined process. In alternative examples, the signal can be provided to a haptic feedback device and indirectly cause the user to halt the operation by informing the user to stop.

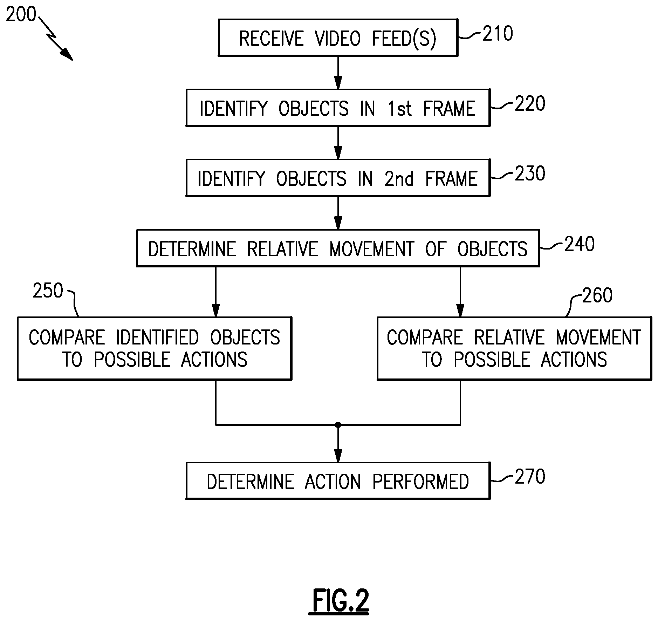

With continued reference to the above system, Figure 2 illustrates an exemplary method 200 by which the processing system 130 (illustrated in Figure 1) determines an action being performed, or an action about to be performed based on the video feed(s). Initially, the processing system 130 receives the video feed(s) from the cameras 120, 142, 150 and performs pre-processing on the video feeds in a "Receive Video Feed(s)" step 210. The pre-processing can include any known form of image processing or pre-processing configured to improve the ability of the processing system 130 to identify objects within frames of the video feed(s).

Once the feed(s) received, the processing system 130 identifies objects in a first frame using a neural network derived analysis in an "Identify Objects in 1^{st} Frame" step 220. The neural network derived analysis includes at least one algorithm created via machine learning to identify specific objects or types of objects (e.g. identifying types of fasteners, tools, components, wires, etc.) within an image. The neural network is trained using one or more datasets including multiple views and manipulations of the objects involved in and associated with the industrial process.

After identifying the objects in the first frame, the objects are again identified in a second frame using the same process in an "Identify Objects in 2^{nd} Frame" step 230. In some example systems, multiple additional frames beyond the first and second frame can be analyzed in a similar manner.

After identifying the object(s) across multiple frames in the preceding steps 220, 230, the processing system 130 compares the positions and orientations of the identified objects and determines relative motions based on changes of the relative positions and orientations of the identified objects in a "Determine Relative Movement of Objects" step 240. The relative motion of the objects includes determining objects moving closer together or farther apart between frames, rotating between frames, or any other relative motions.

After determining the relative motions of the identified objects, the processing system 130 classifies each object as a specific type of object and compares the identified objects to a list of objects associated with learned operator actions in a "Compare Identified Objects to Possible Actions" step 250. The processing system 130 includes a learned set of actions stored in the memory, with the set of actions defining types of actions that could be performed by the user. By way of example, the actions can include rotating a fastener with a drill, connecting a wire to a terminal, or any other action. In some examples, the actions are limited to only actions associated with the industrial process. In other examples, the learned actions can also include additional actions that may be ancillary to the industrial process. Each stored action includes a set of associated objects within the memory of the computer processing system with the set of stored objects defining the objects that are utilized in conjunction with the action.

Simultaneously with comparing the identified objects to the possible actions, the processing system 130 compares the relative movement of the objects to a list of relative motions associated with each possible action in a "Compare Relative Movement to Possible Actions" step 260. As with the classified objects, each of the possible actions includes a set of relative motions corresponding to the action and stored in the memory of the processing system 130.

Once a set of possible actions corresponding to the identified objects and a set of actions corresponding to the relative motions has been determined, the processors system 130 cross compares the identified possible actions and determines the action performed within a confidence in a "Determine Action Performed" step 270. The confidence represents a percentage confidence that the given action has taken place. By way of example, the identified objects and relative movements could be associated with two or more possible actions, but define that a single possible action is 85% likely to be the action that occurred. If the "confidence" is set at 80%, then any action that is at least 80% likely to have occurred is identified as the action. The specific value of the confidence can be preset by a system designer, or iteratively refined over time via a machine learning algorithm to best identify the action performed by a given user. In alternative examples, the system can be configured to identify the action as being whichever action has the highest confidence of the possible actions.

While described above with regards to identifying an action that has occurred (e.g. screwing in a terminal fastener) the system can also determine actions that are likely to occur in the immediate future by identifying precursor actions associated with upcoming actions. By way of non-limiting example, selecting a terminal fastener can be a precursor action for connecting a wire to a terminal when the only use for, or the most likely use for, the terminal fastener is performance of the connection action. By identifying precursor actions associated with a given action as they occur, the processing system 130 can identify that the given action is likely to occur in the immediate future.

When the predicted action corresponds to the next step in the industrial process, the processing system 130 allows the predicted action to occur unimpeded. When the predicted action does not correspond to the next step, the processing system 130 can either prevent that action from occurring by disabling one or more tools required for the action, prompting the user with an audio, visual, or haptic warning that the predicted action is incorrect for the next step, or adapting the industrial process by reordering steps to correspond with the predicted action.

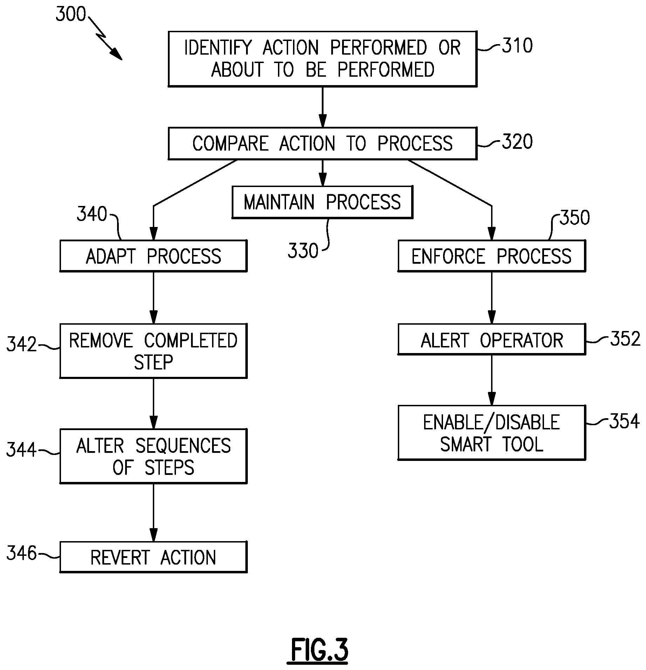

With continued reference to Figure 2, Figure 3 illustrates an exemplary method 300 for adapting an industrial process using the workstation 100 of Figure 1, as well as the neural network trained processing system 130. Initially the processor identifies an action being performed, or an action predicted to be performed in the immediate future in an "Identify Action Performed or About to be Performed" step 310. In one exemplary embodiment, the action performed or about to be performed is identified using the process described above with regards to Figure 2.

Once the action is identified, the processing system 130 compares the identified action against a sequence of actions corresponding to the process being performed, including a step identified as the current step in a "Compare Action to Process" step 320. The sequence of actions is stored in the memory of the processing system 130 and includes sequence dependent steps and sequence independent steps. The sequence dependent steps are a subset of steps that are required to be performed in a specific order. In some examples, the sequence dependent steps must be performed sequentially, with no intervening steps. In other examples, the sequence dependent steps can be defined with a required order but can allow for intervening steps to occur in between sequence dependent steps. In yet further examples, the sequence dependent steps can include subsets of steps that must be performed without intervening steps and other subsets that must be performed in order but still allow intervening steps.

When the action being performed or about to be performed corresponds to the current step of the industrial process, the method 300 maintains the current process in a "Maintain Current Process" step 330. When the predicted action or action being performed is completed, the method 300 progresses the process to the next step, and the method 300 continues by returning to the initial step 310 of identifying the action being performed or about to be performed.

When the action being performed or about to be performed does not correspond to the current step by at least a threshold percentage, the method 300 branches to either an "Adapt Process" step 340 or an "Enforce Process" step 350. As discussed above, the specific threshold can be determined via a neural network and adapted over time to represent the most accurate determinations possible.

When the current step is not within a subset of order dependent steps or when the current step is within a subset of order dependent steps, but allows intervening steps between the order dependent steps, the method 300 moves to the adapt process branch in an "Adapt Process" step 340.

If the action is the completion of a step, and the step is independent of any sequence dependent steps, the adaption can include marking the step as completed and removing the step from the sequenced steps in a "Remove Completed Step" step 342.

If the action is the initiation of a step other than the current step or the instructed next step, the adaption includes modifying the sequence of steps by shifting the step that is being initiated to the current step, providing instructions corresponding to the step being initiated and altering the order of the steps within the defined industrial process to reflect the modifications in an "Alter Sequence of Steps" step 344. In some examples, the sequence alteration can involve shifting the placement of multiple additional steps that are defined as being dependent on the step being initiated, or defined as being more efficiently performed after the step being initiated, and the alteration can create new sequence dependent subsets of steps.

In yet further examples, if the action is the completion or partial completion of a step that will prevent the completion of a step that has not been performed, the adapt process step can include the creation of a new revert previous action step in a "Revert Action" step 346. The newly created revert previous action step includes instructions for reversing the step that was just completed and is defined as a sequence dependent action immediately follow the current action.

When the process is currently in a sequence of steps, or a subsequence of steps that requires the steps to be performed in order with no intervening steps or when the identified step would be a step performed out of order in a sequence of dependent steps that allows intervening steps, the method 300 branches to the "Enforce Process" step 350. Within the enforce process step 350, the method 300 alerts the operator that action being performed is improper via audio, visual, and/or haptic alerts. In examples where smart tools are being utilized and are connected to the processing system 130, the enforce process step 350 also disables any smart tools unnecessary to the current step and enables the smart tools required for the current step in an "Enable/Disable Smart Tool" step 354. As part of the enabling process, the processing system 130 can, in some examples, limit the outputs (e.g. torque) of a smart tool 140 capable of outputting multiple different outputs to only outputs required for the current step of the process.

While the above is described within the context of industrial processes, it is appreciated that the systems and methods for enforcing the processes can be applied to any process having the appropriate infrastructure. These can include, but are not limited to, home projects, commercial assembly systems, and the like.

## Claims

1. A method (300) performed by a smart system (100) for optimizing a process comprising:
selecting a nominal process and providing instructions for a step of the nominal process to a user;
analyzing (320) at least one camera feed using a neural network and determining at least one of an action performed by the user and an action expected to be performed by the user;
adapting (340) the nominal process in response to the action performed by the user varying from the provided instructions;
providing instructions (344) for a next step of the adapted nominal process, wherein the instructions for a next step deviate from the nominal process based on the determined action performed by the user; and
reiterating the steps of analyzing (320) the at least one camera feed, adapting (340) the nominal process, and providing instructions (344) for a next step of the adapted process until the process is completed,
enforcing (350) at least a portion of the nominal process by disabling (354) a smart tool (140) in response to the determined action expected to be performed by the user varying from the nominal process.

2. The method (300) of claim 1, wherein analyzing (320) at least one camera feed includes monitoring a stationary camera (120) feed and determining the action performed by the user includes identifying an interaction between the user and an assembly within a field of view (122) of the stationary camera (120) feed.

3. The method (300) of claim 2, wherein adapting (340) the nominal process includes comparing the determined action performed by the user with a plurality of actions defined by the nominal process and removing a subsequent step from the adapted nominal process in response to the determined action matching the subsequent step.

4. The method (300) of claim 2, wherein adapting the nominal process includes generating the next step and wherein the next step includes reverting (346) at least part of the action performed by the user.

5. The method (300) of claim 1 further comprising disabling (354) the smart tool (140) to prevent a user from performing the expected determined action.

6. The method (300) of claim 1, further comprising enforcing at least a portion of the nominal process by displaying (160) a correct procedure of the step to a user.

7. The method (300) of claim 6, wherein the at least one camera feed includes a stationary camera (120) feed and wherein displaying (160) a correct procedure of the step includes displaying the stationary camera (120) feed and displaying (160) an overlay superimposed on the camera feed.

8. The method (300) of claim 7, further including projecting the overlay directly onto at least a portion of a work area (104), optionally wherein the overlay includes a computer generated animation demonstrating the nominal process.

9. The method (300) of claim 1, wherein the nominal process includes a plurality of ordered steps and the plurality of ordered steps includes a subset of sequence dependent steps, and wherein adapting the nominal process includes displaying a next sequence dependent step in response to the determined action being an initial step of the subset of sequence dependent steps.

10. The method (300) of claim 9, further comprising preventing actions and operations unnecessary to perform the sequence dependent steps until the subset of sequence dependent steps is performed in response to determining that the initial step of the subset of sequence dependent steps is the at least one of the action performed by the user and the action expected to be performed by the user.

11. The method (300) of claim 10, wherein preventing actions and operations unnecessary to perform the sequence dependent steps until the subset of sequence dependent steps is performed includes one of disabling (354) at least one smart tool unnecessary to perform the sequence dependent steps and limiting operations of at least one smart tool to a mode of operations required for performance of a current step of the sequence dependent steps.

12. The method (200, 300) of claim 1, wherein analyzing the at least one camera feed using the neural network comprises:
identifying (220, 230) a plurality of objects within the at least one camera feed using a neural network;
monitoring (240) a relative position of the plurality of objects using the neural network over a time period;
comparing (250, 260) a change in the relative position over the time period against a plurality of predefined movements, each of the movements being correlated with at least one user action; and
determining (270) that at least one specific action has occurred in response to the change in relative positions matching at least one correlated user action to a confidence level above a determined confidence, optionally wherein the determined confidence is iteratively refined over time via a second neural network.

13. A smart system (100) for a manual process comprising:
a workstation (104) including at least one smart tool (140) and a workspace (104), the smart tool (140) being connected to a processing system (130);
at least a first camera (120) having a first field (122) of view including the workspace (104), the first camera (120) being connected to the processing system (130);
a dynamic display (160) connected to the processing system (130) and configured to receive instructions corresponding to at least a current step of an operation and display the instructions;
the processing system (130) including a memory and a processor, the memory storing instructions for causing the processor to selecting a nominal process and providing instructions for a step of the nominal process to a user, analyzing at least one camera feed using a neural network and determining at least one of an action performed by the user and an action expected to be performed by the user, adapting the nominal process in response to the action performed by the user varying from the provided instructions, providing instructions for a next step of the adapted nominal process, wherein the instructions for a next step deviate from the nominal process based on the determined action performed by the user, reiterating the steps of analyzing the at least one camera feed, adapting the nominal process, and providing instructions for a next step of the adapted process until the process is completed, and enforcing at least a portion of the nominal process by disabling a smart tool (140) in response to the determined action expected to be performed by the user varying from the nominal process.

14. The smart system (100) of claim 13, wherein the at least one camera includes a first static camera (120) providing a static view of the workspace (140) and a second dynamic camera (142, 150) configured to provide a dynamic view of the workspace (104).

15. The smart system (100) of claim 14, wherein the dynamic camera is one of a wearable camera (150) defining a field of view (134) including at least a portion of an operator, a camera (142) fixed to a smart tool (140) connected to the processing system (130), and a moveable camera defining a field of view including at least one worked object, and optionally wherein the at least a portion of the operator includes the operator's hand.

## Patentansprüche

1. Verfahren (300), das von einem intelligenten System (100) zum Optimieren eines Prozesses durchgeführt wird, umfassend:
Auswählen eines nominalen Prozesses und Bereitstellen von Anweisungen für einen Schritt des nominalen Prozesses für einen Benutzer;
Analysieren (320) mindestens einer Kameraaufnahme unter Verwendung eines neuronalen Netzes und Feststellen mindestens eines von einer vom Benutzer durchgeführten Aktion und einer Aktion, von der zu erwarten ist, dass sie vom Benutzer durchgeführt wird;
Anpassen (340) des nominalen Prozesses als Reaktion darauf, dass die vom Benutzer durchgeführte Handlung von den bereitgestellten Anweisungen abweicht;
Bereitstellen von Anweisungen (344) für einen nächsten Schritt des angepassten nominalen Prozesses, wobei die Anweisungen für einen nächsten Schritt vom nominalen Prozess abweichen, basierend auf der festgestellten vom Benutzer durchgeführten Aktion; und
Wiederholen der Schritte des Analysierens (320) der mindestens einen Kameraaufnahme, des Anpassens (340) des nominalen Prozesses und des Bereitstellens von Anweisungen (344) für einen nächsten Schritt des angepassten Prozesses, bis der Prozess abgeschlossen ist,
Erzwingen (350) mindestens eines Teils des nominalen Prozesses durch Deaktivieren (354) eines intelligenten Werkzeugs (140) als Reaktion darauf, dass die festgestellte Aktion, von der zu erwarten ist, dass sie vom Benutzer durchgeführt wird, vom nominalen Prozess abweicht.

2. Verfahren (300) nach Anspruch 1, wobei das Analysieren (320) mindestens einer Kameraaufnahme das Überwachen einer stehenden Kameraaufnahme (120) einschließt und das Feststellen der vom Benutzer durchgeführten Aktion das Identifizieren einer Interaktion zwischen dem Benutzer und einer Baugruppe innerhalb eines Sichtfeldes (122) der stehenden Kameraaufnahme (120) einschließt.

3. Verfahren (300) nach Anspruch 2, wobei das Anpassen (340) des nominalen Prozesses das Vergleichen der festgestellten vom Benutzer durchgeführten Aktion mit einer Vielzahl von durch den nominalen Prozess definierten Aktionen und das Entfernen eines nachfolgenden Schritts aus dem angepassten nominalen Prozess als Reaktion darauf, dass die festgestellte Aktion mit dem nachfolgenden Schritt übereinstimmt, einschließt.

4. Verfahren (300) nach Anspruch 2, wobei das Anpassen des nominalen Prozesses das Erzeugen des nächsten Schritts einschließt und wobei der nächste Schritt das Rückgängigmachen (346) mindestens eines Teils der vom Benutzer durchgeführten Aktion umfasst.

5. Verfahren (300) nach Anspruch 1, weiter umfassend das Deaktivieren (354) des intelligenten Werkzeugs (140), um zu verhindern, dass ein Benutzer die erwartete festgelegte Aktion durchführt.

6. Verfahren (300) nach Anspruch 1, weiter umfassend das Erzwingen mindestens eines Teils des nominalen Prozesses durch Anzeigen (160) einer korrekten Vorgehensweise des Schrittes für einen Benutzer.

7. Verfahren (300) nach Anspruch 6, wobei die mindestens eine Kameraaufnahme eine stehende Kameraaufnahme (120) einschließt und wobei das Anzeigen (160) einer korrekten Vorgehensweise des Schrittes das Anzeigen der stehenden Kameraaufnahme (120) und das Anzeigen (160) einer der Kameraaufnahme überlagerten Einblendung einschließt.

8. Verfahren (300) nach Anspruch 7, weiter einschließend das Projizieren der Einblendung direkt auf mindestens einen Teil eines Arbeitsbereichs (104), wahlweise, wobei die Einblendung eine computergenerierte Animation einschließt, die den nominalen Prozess veranschaulicht.

9. Verfahren (300) nach Anspruch 1, wobei der nominale Prozess eine Vielzahl geordneter Schritte umfasst und die Vielzahl geordneter Schritte eine Teilmenge sequenzabhängiger Schritte einschließt, und wobei das Anpassen des nominalen Prozesses das Anzeigen eines nächsten sequenzabhängigen Schritts als Reaktion darauf einschließt, dass die festgestellte Aktion ein anfänglicher Schritt der Teilmenge sequenzabhängiger Schritte ist.

10. Verfahren (300) nach Anspruch 9, weiter umfassend das Verhindern von Aktionen und Operationen, die zum Durchführen der sequenzabhängigen Schritte nicht erforderlich sind, bis die Teilmenge sequenzabhängiger Schritte durchgeführt ist, als Reaktion auf Feststellen, dass der anfängliche Schritt der Teilmenge sequenzabhängiger Schritte mindestens die eine von der vom Benutzer durchgeführten Aktion und der Aktion, von der zu erwarten ist, dass sie vom Benutzer durchgeführt wird, ist.

11. Verfahren (300) nach Anspruch 10, wobei das Verhindern von Aktionen und Operationen, die zum Durchführen der sequenzabhängigen Schritte nicht erforderlich sind, bis die Teilmenge der sequenzabhängigen Schritte durchgeführt ist, eines von Deaktivieren (354) mindestens eines intelligenten Werkzeugs, das zum Durchführen der sequenzabhängigen Schritte nicht erforderlich ist, und Begrenzen von Operationen mindestens eines intelligenten Werkzeugs auf einen Modus von Operationen, die zum Durchführen eines aktuellen Schritts der sequenzabhängigen Schritte erforderlich sind, einschließt.

12. Verfahren (200, 300) nach Anspruch 1, wobei das Analysieren der mindestens einen Kameraaufnahme unter Verwendung des neuronalen Netzes Folgendes umfasst:
Identifizieren (220, 230) einer Vielzahl von Objekten innerhalb der mindestens einen Kameraaufnahme unter Verwendung eines neuronalen Netzes;
Überwachen (240) einer relativen Position der Vielzahl von Objekten unter Verwendung des neuronalen Netzes über einen Zeitraum;
Vergleichen (250, 260) einer Änderung bei der relativen Position über den Zeitraum mit einer Vielzahl vordefinierter Bewegungen, wobei jede der Bewegungen mit mindestens einer Benutzeraktion korreliert ist; und
Feststellen (270), dass mindestens eine spezifische Aktion als Reaktion darauf erfolgt ist, dass die Änderung bei relativen Positionen mindestens eine korrelierte Benutzeraktion mit einem Konfidenzniveau oberhalb eines festgestellten Vertrauens abgleicht, wahlweise, wobei das festgestellte Vertrauen mit der Zeit iterativ über ein zweites neuronales Netz verfeinert wird.

13. Intelligentes System (100) für einen manuellen Prozess, das Folgendes umfasst:
eine Arbeitsstation (104), die mindestens ein intelligentes Werkzeug (140) und einen Arbeitsbereich (104) einschließt, wobei das intelligente Werkzeug (140) mit einem Verarbeitungssystem (130) verbunden ist;
mindestens eine erste Kamera (120), die ein erstes Sichtfeld (122) aufweist, das den Arbeitsbereich (104) einschließt, wobei die erste Kamera (120) mit dem Verarbeitungssystem (130) verbunden ist;
eine dynamische Anzeige (160), die mit dem Verarbeitungssystem (130) verbunden und dafür konfiguriert ist, Anweisungen zu empfangen, die mindestens einem aktuellen Schritt einer Operation entsprechen, und die Anweisungen anzuzeigen;
das Verarbeitungssystem (130), das einen Speicher und einen Prozessor einschließt, wobei der Speicher Anweisungen speichert, um den Prozessor zu veranlassen, einen nominalen Prozess auszuwählen und einem Benutzer Anweisungen für einen Schritt des nominalen Prozesses bereitzustellen mindestens eine Kameraaufnahme unter Verwendung eines neuronalen Netzes zu analysieren und mindestens eine von einer vom Benutzer durchgeführten Aktion und einer Aktion, von der zu erwarten ist, dass sie vom Benutzer durchgeführt wird, festzustellen, den nominalen Prozess als Reaktion darauf, dass die vom Benutzer durchgeführte Aktion von den bereitgestellten Anweisungen abweicht, anzupassen, Anweisungen für einen nächsten Schritt des angepassten nominalen Prozesses bereitzustellen, wobei die Anweisungen für einen nächsten Schritt basierend auf der festgestellten durch den Benutzer durchgeführten Aktion vom nominalen Prozess abweichen, die Schritte des Analysierens der Kameraaufnahme, des Anpassens des nominalen Prozesses und des Bereitstellens von Anweisungen für einen nächsten Schritt des angepassten Prozesses zu wiederholen, bis der Prozess abgeschlossen ist, und mindestens einen Teil des nominalen Prozesses durch Deaktivieren eines intelligenten Werkzeugs (140) als Reaktion darauf zu erzwingen, dass die festgestellte Aktion, von der zu erwarten ist, dass sie vom Benutzer durchgeführt wird, vom nominalen Prozess abweicht.

14. Intelligentes System (100) nach Anspruch 13, wobei die mindestens eine Kamera eine erste statische Kamera (120), die eine statische Ansicht des Arbeitsbereichs (140) bereitstellt, und eine zweite dynamische Kamera (142, 150), die dafür konfiguriert ist, eine dynamische Ansicht des Arbeitsbereichs (104) bereitzustellen, einschließt.

15. Intelligentes System (100) nach Anspruch 14, wobei die dynamischen Kamera eines von einer tragbaren Kamera (150), die ein Sichtfeld (134) definiert, das mindestens einen Teil eines Bedieners einschließt, einer an einem intelligenten Werkzeug (140) befestigten Kamera (142), die mit dem Verarbeitungssystem (130) verbunden ist, und einer beweglichen Kamera, die ein Sichtfeld definiert, das mindestens ein bearbeitetes Objekt einschließt, wahlweise, wobei der mindestens eine Teil des Bedieners die Hand des Bedieners einschließt.

## Revendications

1. Procédé (300) mis en œuvre par un système intelligent (100) pour optimiser un processus comprenant :
la sélection d'un processus nominal et la fourniture d'instructions pour une étape du processus nominal à un utilisateur ;
l'analyse (320) d'au moins un flux de caméra à l'aide d'un réseau neuronal et la détermination d'au moins une parmi une action réalisée par l'utilisateur et une action que l'utilisateur est censé réaliser ;
l'adaptation (340) du processus nominal en réponse au fait que l'action réalisée par l'utilisateur diffère des instructions fournies ;
la fourniture d'instructions (344) pour une étape suivante du processus nominal adapté, dans lequel les instructions pour une étape suivante s'écartent du processus nominal sur la base de l'action déterminée réalisée par l'utilisateur ; et
la réitération des étapes d'analyse (320) du au moins un flux de caméra, d'adaptation (340) du processus nominal et de fourniture d'instructions (344) pour une étape suivante du processus adapté jusqu'à ce que le processus soit terminé,
l'application (350) d'au moins une portion du processus nominal en désactivant (354) un outil intelligent (140) en réponse au fait que l'action déterminée que l'utilisateur est censé réaliser diffère du processus nominal.

2. Procédé (300) selon la revendication 1, dans lequel l'analyse (320) d'au moins un flux de caméra inclut la surveillance d'un flux de caméra stationnaire (120) et la détermination de l'action réalisée par l'utilisateur inclut l'identification d'une interaction entre l'utilisateur et un assemblage dans un champ de vision (122) du flux de caméra stationnaire (120).

3. Procédé (300) selon la revendication 2, dans lequel l'adaptation (340) du processus nominal inclut la comparaison de l'action déterminée réalisée par l'utilisateur avec une pluralité d'actions définies par le processus nominal et la suppression d'une étape ultérieure du processus nominal adapté en réponse au fait que l'action déterminée coïncide avec l'étape ultérieure.

4. Procédé (300) selon la revendication 2, dans lequel l'adaptation du processus nominal inclut la génération de l'étape suivante et dans lequel l'étape suivante inclut l'annulation (346) d'au moins une partie de l'action réalisée par l'utilisateur.

5. Procédé (300) selon la revendication 1 comprenant en outre la désactivation (354) de l'outil intelligent (140) pour empêcher un utilisateur de réaliser l'action déterminée qu'il est censé réaliser.

6. Procédé (300) selon la revendication 1, comprenant en outre l'application d'au moins une portion du processus nominal en affichant (160) une procédure correcte de l'étape pour un utilisateur.

7. Procédé (300) selon la revendication 6, dans lequel le au moins un flux de caméra inclut un flux de caméra stationnaire (120) et dans lequel l'affichage (160) d'une procédure correcte de l'étape inclut l'affichage du flux de caméra stationnaire (120) et l'affichage (160) d'un recouvrement superposé au flux de caméra.

8. Procédé (300) selon la revendication 7, incluant en outre la projection du recouvrement directement sur au moins une portion d'une zone de travail (104), éventuellement dans lequel le recouvrement inclut une animation générée par ordinateur illustrant le processus nominal.

9. Procédé (300) selon la revendication 1, dans lequel le processus nominal inclut une pluralité d'étapes ordonnées et la pluralité d'étapes ordonnées inclut un sous-ensemble d'étapes dépendantes de la séquence, et dans lequel l'adaptation du processus nominal inclut l'affichage d'une étape suivante dépendante de la séquence en réponse au fait que l'action déterminée soit une étape initiale du sous-ensemble d'étapes dépendantes de la séquence.

10. Procédé (300) selon la revendication 9, comprenant en outre le fait d'empêcher des actions et des opérations inutiles pour réaliser les étapes dépendantes de la séquence jusqu'à ce que le sous-ensemble d'étapes dépendantes de la séquence soit réalisé en réponse à la détermination que l'étape initiale du sous-ensemble d'étapes dépendantes de la séquence est la au moins une parmi l'action réalisée par l'utilisateur et l'action que l'utilisateur est censé réaliser.

11. Procédé (300) selon la revendication 10, dans lequel le fait d'empêcher des actions et des opérations inutiles pour réaliser les étapes dépendantes de la séquence jusqu'à ce que le sous-ensemble d'étapes dépendantes de la séquence soit réalisé inclut une parmi la désactivation (354) d'au moins un outil intelligent inutile pour réaliser les étapes dépendantes de la séquence et la limitation d'opérations d'au moins un outil intelligent à un mode d'opérations requis pour réaliser une étape courante des étapes dépendantes de la séquence.

12. Procédé (200, 300) selon la revendication 1, dans lequel l'analyse du au moins un flux de caméra à l'aide du réseau neuronal comprend :
l'identification (220, 230) d'une pluralité d'objets dans le au moins un flux de caméra à l'aide d'un réseau neuronal ;
la surveillance (240) d'une position relative de la pluralité d'objets à l'aide du réseau neuronal au cours d'une période de temps ;
la comparaison (250, 260) d'un changement de position relative au cours de la période de temps à une pluralité de mouvements prédéfinis, chacun des mouvements étant corrélé à au moins une action d'utilisateur ; et
la détermination (270) qu'au moins une action spécifique s'est produite en réponse au fait que le changement de positions relatives coïncide avec au moins une action d'utilisateur corrélée à un niveau de confiance supérieur à une confiance déterminée, éventuellement dans lequel la confiance déterminée est affinée de manière itérative au fil du temps via un second réseau neuronal.

13. Système intelligent (100) pour un processus manuel comprenant :
un poste de travail (104) incluant au moins un outil intelligent (140) et un espace de travail (104), l'outil intelligent (140) étant connecté à un système de traitement (130) ;
au moins une première caméra (120) présentant un premier champ de vision (122) incluant l'espace de travail (104), la première caméra (120) étant connectée au système de traitement (130) ;
un afficheur dynamique (160) connecté au système de traitement (130) et configuré pour recevoir des instructions correspondant à au moins une étape courante d'une opération et afficher les instructions ;
le système de traitement (130) incluant une mémoire et un processeur, la mémoire stockant des instructions pour amener le processeur à sélectionner un processus nominal et fournir des instructions pour une étape du processus nominal à un utilisateur, analyser au moins un flux de caméra à l'aide d'un réseau neuronal et déterminer au moins une parmi une action réalisée par l'utilisateur et une action que l'utilisateur est censé réaliser, adapter le processus nominal en réponse au fait que l'action réalisée par l'utilisateur diffère des instructions fournies, fournir des instructions pour une étape suivante du processus nominal adapté, dans lequel les instructions pour une étape suivante s'écartent du processus nominal sur la base de l'action déterminée réalisée par l'utilisateur, réitérer les étapes d'analyse du au moins un flux de caméra, adapter le processus nominal et fournir des instructions pour une étape suivante du processus adapté jusqu'à ce que le processus soit terminé, et appliquer au moins une portion du processus nominal en désactivant un outil intelligent (140) en réponse au fait que l'action déterminée que l'utilisateur est censé réaliser diffère du processus nominal.

14. Système intelligent (100) selon la revendication 13, dans lequel la au moins une caméra inclut une première caméra statique (120) fournissant une vue statique de l'espace de travail (140) et une seconde caméra dynamique (142, 150) configurée pour fournir une vue dynamique de l'espace de travail (104).

15. Système intelligent (100) selon la revendication 14, dans lequel la caméra dynamique est une parmi une caméra portable (150) définissant un champ de vision (134) incluant au moins une portion d'un opérateur, une caméra (142) fixée à un outil intelligent (140) connecté au système de traitement (130), et une caméra mobile définissant un champ de vision incluant au moins un objet travaillé, et éventuellement dans lequel la au moins une portion de l'opérateur inclut la main de l'opérateur.
